# EUROPÄISCHE PATENTSCHRIFT

(11) **EP 2 601 028 B1**
(45) Veröffentlichungstag und Bekanntmachung des Hinweises auf die Patenterteilung: **08.03.2017**
(21) Anmeldenummer: 11740892.2
(22) Anmeldetag: 29.07.2011
(51) Int. Cl.: B29C 43/48, B27N 3/24, B30B 5/06

(54) **DOPPELBANDPRESSE UND VERFAHREN ZUM HERSTELLEN EINES PLATTENFÖRMIGEN PRODUKTS MIT EINER DOPPELBANDPRESSE**
DOUBLE BELT PRESS AND METHOD FOR PRODUCING A PLATE-LIKE PRODUCT USING A DOUBLE BELT PRESS
PRESSE À DOUBLE BANDE ET PROCÉDÉ DE FABRICATION D'UN PRODUIT EN FORME DE PLAQUE AU MOYEN D'UNE PRESSE À DOUBLE BANDE

(30) Priorität: 03.08.2010 DE 102010033578
(43) Veröffentlichungstag der Anmeldung: 12.06.2013
(73) Patentinhaber: Sandvik Materials Technology Deutschland GmbH, 40549 Düsseldorf (DE); TPS TechnoPartner Samtronic GmbH, 73037 Göppingen (DE)
(72) Erfinder: SCHROMM, Hans-Kurt, 71522 Backnang (DE); VOITH, Bernhard, 73113 Ottenbach (DE); KLEINHANS, Matthias, 71336 Waiblingen (DE)
(74) Vertreter: Patentanwälte Ruff, Wilhelm, Beier, Dauster & Partner mbB
(86) Internationale Anmeldenummer: PCT/EP2011/063066
(87) Internationale Veröffentlichungsnummer: WO 2012/016916

(56) Entgegenhaltungen:
- EP-A2- 0 046 526
- EP-A2- 1 674 227
- DE-A1- 1 504 816
- DE-A1- 2 922 151
- DE-A1- 10 123 865
- DE-A1- 10 339 679
- DE-A1- 19 704 643

## Beschreibung

Die Erfindung betrifft eine Doppelbandpresse mit einem ersten, unteren umlaufenden Kunststoffband und einem zweiten, oberen umlaufenden Kunststoffband, wobei die Kunststoffbänder eine erste, niedrige Biegesteifigkeit aufweisen, und wobei ein Produktspalt zwischen den einander zugewandten Trums der Kunststoffbänder zum Formen eines plattenförmigen Produkts gebildet ist. Die Erfindung betrifft auch ein Verfahren zum Herstellen eines plattenförmigen Produkts mit einer Doppelbandpresse.

Aus der europäischen Patentschrift EP 1 045 751 B1 ist eine Doppelbandpresse mit einem Produktspalt zwischen zwei abschnittsweise parallel verlaufenden Kunststoffbändern bekannt. Ein thermoplastisches Vorprodukt wird in einem Aufgabebereich auf ein unteres Kunststoffband aufgestreut und dann zwischen den beiden Kunststoffbändern im Produktspalt zu einem plattenförmigen Produkt geformt. Eine Verbindung des thermoplastischen Vorprodukts zu einem stabilen plattenförmigen Produkt erfolgt durch eine quasi drucklose Verschweißung des thermoplastischen Vorprodukts unter einem Druck von maximal 0,2bar. Diese bekannte Doppelbandpresse weist Nachteile auf, wenn es um die Herstellung von dickeren plattenförmigen Produkten und/oder um die Verarbeitung faseriger Vorprodukte geht, beispielsweise bei der Verarbeitung von Naturfasern.

In der deutschen Offenlegungsschrift DE 10 339 679 A1 ist ein kontinuierliches Verfahren zum Herstellen einer Wärmedämmplatte mit einer Doppelbandpresse beschrieben. Die Doppelbandpresse weist ein oberes und unteres Kunststoffband sowie ein oberes und unteres umlaufendes Stahlband auf. In dem Formabschnitt verläuft im Betrieb das untere Stahlband parallel und anliegend an eine dem Produktspalt abgewandte Rückseite des unteren Kunststoffbandes und in dem Formabschnitt verläuft im Betrieb das zweite obere Stahlband parallel und anliegend an eine dem Produktspalt abgewandte Rückseite des zweiten Kunststoffbandes. Stromaufwärts des Formabschnitts ist ein keilförmiger Vorverdichtungsbereich zwischen den Kunststoffbändern vorhanden. Stromabwärts des Formabschnitts endet der Produktspalt.

Die deutsche Offenlegungsschrift DE 10 123 865 A1 beschreibt eine Beschichtungspresse, mit der ein bereits plattenförmiges Pressgut auf seiner Oberseite beschichtet werden soll. Das plattenförmige Pressgut wird zwischen zwei Stahlbänder eingeführt, wobei auf der Beschichtungsseite zwischen dem oberen Stahlband und der Oberseite des Pressguts ein umlaufendes Kunststoffband geführt ist.

Aus der europäischen Offenlegungsschrift EP 1 674 227 A2 ist eine Doppelbandpresse zum Herstellen keramischer Schichten bekannt. Hierzu wird eine Doppelbandpresse mit einem oberen und einem unteren umlaufenden Stahlband verwendet.

Mit der Erfindung soll eine verbesserte Doppelbandpresse und ein verbessertes Verfahren zum Herstellen eines plattenförmigen Produkts mit einer Doppelbandpresse angegeben werden. Diese Aufgabe wird durch die Doppelbandpresse nach Anspruch 1 und das Verfahren nach Anspruch 13 gelöst.Vorteilhafte Weiterbildungen sind in den Unteransprüchen angegeben.

Erfindungsgemäß ist hierzu eine Doppelbandpresse mit einem ersten, unteren umlaufenden Kunststoffband und einem zweiten, oberen umlaufenden Kunststoffband vorgesehen, wobei die Kunststoffbänder eine erste, niedrige Biegesteifigkeit aufweisen und wobei ein Produktspalt zwischen den einander zugewandten Trums der Kunststoffbänder zum Formen eines plattenförmigen Produkts gebildet ist, bei der ein erstes umlaufendes unteres Stahlband und ein zweites umlaufendes oberes Stahlband vorgesehen sind, wobei die Stahlbänder eine zweite, gegenüber der Biegesteifigkeit der Kunststoffbänder hohe Biegesteifigkeit aufweisen, wobei ein Formabschnitt zwischen den einander zugewandten Trums der Stahlbänder gebildet ist, wobei der Formabschnitt Teil des Produktspalts bildet, wobei in dem Formabschnitt im Betrieb das erste untere Stahlband parallel und anliegend an eine dem Produktspalt abgewandte Rückseite des ersten Kunststoffbands verläuft und wobei in dem Formabschnitt im Betrieb das zweite obere Stahlband parallel und anliegend an eine dem Produktspalt abgewandte Rückseite des zweiten Kunststoffbands verläuft, wobei sich stromaufwärts und stromabwärts des Formabschnitts Abschnitte des Produktspalts anschließen in denen der Produktspalt dieselbe konstante Höhe aufweist wie im Formabschnitt.

Durch Vorsehen der einen Formabschnitt bildenden Stahlbänder, die jeweils an einer Rückseite der Kunststoffbänder abschnittsweise anliegen, können in überraschend einfacher Weise die Vorteile einer Doppelbandpresse mit Kunststoffbändern mit denen einer Doppelbandpresse mit Stahlbändern kombiniert werden, ohne die jeweiligen Nachteile in Kauf nehmen zu müssen. Mit den Stahlbändern kann im Formabschnitt ein deutlich höherer Druck auf dem Produktspalt und das darin befindliche Vorprodukt ausgeübt werden, als dies mit Kunststoffbändern möglich wäre. Speziell erlaubt es die höhere Biegesteifigkeit der Stahlbänder einen gegenüber Kunststoffbändern stark vergleichmäßigten Druckverlauf auch über eine größere Länge des Formabschnitts aufrecht zu erhalten. Das Vorprodukt selbst steht auch im Formabschnitt aber immer ausschließlich mit den Kunststoffbändern in Kontakt, so dass kein Anhaften des Vorprodukts an den Stahlbändern zu befürchten ist. Auch in energetischer Hinsicht bietet die erfindungsgemäße Doppelbandpresse Vorteile. So kann im Formabschnitt über die gesamte Prozessdauer eine konstante Temperatur aufrecht erhalten werden. Aufgrund der gegenüber Kunststoffbändern hohe Wärmespeicherkapazität der Stahlbänder ist dies mit geringen Verlusten und auch durch nicht unmittelbar im Formbereich liegende Heizvorrichtungen möglich. Die bei reinen Stahlbandpressen auftretenden Nachteile durch die erforderliche Abkühlung des Stahlbandes in unterschiedlichen Abschnitten eines Produktspalts treten bei der erfindungsgemäßen Doppelbandpresse aber nicht auf, da die Stahlbänder ja lediglich im Formabschnitt Teil des Produktspalts bilden. Ein Abkühlen des Produkts im Produktspalt kann dann beispielsweise stromabwärts des Formabschnitts zwischen den Kunststoffbändern erfolgen. Aufgrund der schlechten Wärmeleitfähigkeit von Kunststoff sind die Wärmeverluste der erfindungsgemäßen Doppelbandpresse dadurch erheblich geringer als bei reinen Stahlbandpressen. Mit der erfindungsgemäßen Doppelbandpresse lassen sich dadurch auch sehr dicke plattenförmige Produkte problemlos herstellen, sowie auch Vorprodukte zu plattenförmigen Produkten formen, die einen hohen Anpressdruck im Produktspalt erfordern. Dennoch ist die erfindungsgemäße Doppelbandpresse gegenüber reinen Stahlbandpressen kostengünstig ausführbar, da die Stahlbänder ja lediglich im Formabschnitt benötigt werden und in Bezug auf den Herstellungsprozess des plattenförmigen Produkts genau so problemlos betreibbar sind wie konventionelle Doppelbandpressen mit Kunststoffbändern. Erfindungsgemäß sind weiter Heiz- und/oder Kühlvorrichtungen zum Heizen bzw. Kühlen des ersten und des zweiten Kunststoffbandes außerhalb des Formabschnitts vorgesehen. Beilspielsweise kann das Kunststoffband in einem Aufgabebereich beheizt werden und auch in einem Teil des Produktspalts stromaufwärts des Formabschnitts. Stromabwärts des Formabschnitts kann dann problemlos eine Kühlung der Kunststoffbänder vorgenommen werden. Die Energieverluste sind dabei gering, da die Kunststoffbänder aufgrund ihrer geringen Wärmespeicherkapazität wenig Wärmeenergie speichern und entlang dem Produktspalt weitertragen. Bereits außerhalb des Formabschnitts mit den Stahlbändern kann dadurch das plattenförmige Produkt vorgeformt werden.

In Weiterbildung der Erfindung sind Heiz- und/oder Kühlvorrichtungen zum Heizen bzw. Kühlen des ersten und zweiten Stahlbands vorgesehen.

Durch Heizen und/oder Kühlen des Stahlbandes kann der Formabschnitt als Teil des Produktspaltes problemlos auf einer annähernd konstanten Temperatur gehalten werden. Dies deshalb, da die hohe Wärmespeicherkapazität der Stahlbänder eine gleichmäßige Temperatur über die gesamte Länge des Formabschnitts ermöglicht.

In Weiterbildung der Erfindung sind Andrückvorrichtungen vorgesehen, um im Formabschnitt auf ein zwischen den Kunststoffbändern angeordnetes Produkt mittels der Stahlbänder einen Anpressdruck aufzubringen.

Solche Andrückvorrichtungen können beispielsweise auf einer Rückseite des jeweiligen Stahlbandes laufende Rollenketten, Andrückwalzen, Andrückplatten oder dergleichen sein. Hier kann auf bewährte und bei Stahlbandpressen bereits bekannte Andrückvorrichtungen zurückgegriffen werden. Werden beispielsweise in Längsrichtung voneinander beabstandete Andrückwalzen verwendet, so lässt sich aufgrund der hohen Biegesteifigkeit der Stahlbänder trotz des im Wesentlichen linienförmigen Kontakts der Andrückwalzen ein vergleichmäßigter Anpressdruckverlauf realisieren. Der Verlauf des Anpressdrucks ist in jedem Fall wesentlich gleichmäßiger als dann, wenn ein Kunststoffband mit geringer Biegesteifigkeit durch mehrere, hintereinander liegende Andrückwalzen angepresst wird.

Vorteilhafterweise liegt der Anpressdruck im Bereich von 0,1 bar bis 50bar.

Durch einen solchen Druckbereich können schwierig zu verarbeitende Produkte oder vergleichsweise dicke plattenförmige Produkte gut verarbeitet werden. Dennoch werden die Kosten der Doppelbandpresse gering gehalten, da über 50bar liegende Anpressdrücke, wie sie mit herkömmlichen Stahlbanddoppelbandpressen ohne weiteres erzielt werden können, nicht erforderlich sind.

In Weiterbildung der Erfindung sind die Andrückvorrichtungen ausgebildet, um mittels der Stahlbänder im Formabschnitt einen im Wesentlichen über den gesamten Formabschnitt gleichmäßigen Anpressdruck aufzubringen.

Das Vorsehen eines sogenannten isobaren Anpressdrucks im Formabschnitt ist aufgrund der höheren Biegesteifigkeit der Stahlbänder und deren gegenüber Kunststoffbändern allgemein größeren mechanischen Belastbarkeit problemlos zu realisieren. Beilspielsweise sind die Andrückvorrichtungen ausgebildet, um eine dem Produktspalt abgewandte Rückseite der Stahlbänder mit unter Druck stehendem Fluid zu beaufschlagen.

In Weiterbildung der Erfindung sind die Kunststoffbänder wenigstens auf ihrer dem Produktspalt zugewandten Seite mit einer Antihaftbeschichtung versehen.

Eine solche Antihaftbeschichtung kann beispielsweise aus Teflon bestehen und ist zweckmäßigerweise auf die Art des herzustellenden plattenförmigen Produkts abgestimmt. Durch Vorsehen einer solchen Antihaftbeschichtung kann sich das hergestellte plattenförmige Produkt am Ende des Produktspalts leicht von den Kunststoffbändern ablösen und beispielsweise kann das plattenförmige Produkt auch noch in einem sehr heißen Zustand aus dem Produktspalt entnommen werden. Eine Antihaftbeschichtung kann beispielsweise auch durch ständiges Aufsprühen einer Flüssigkeit stromaufwärts des Produktspaltes erfolgen. Eine Antihaftbeschichtung kann auch als sogenannte Nanobeschichtung ausgebildet sein, die einen erheblich verringerten Kontaktwinkel eines zu verarbeitenden Produkts auf den Kunststoffbändern bewirkt. Eine solche Nanobeschichtung kann beispielsweise den sogenannten Lotuseffekt bewirken, bei dem ein Kontaktwinkel zwischen einem Produkttropfen und dem Kunststoffband einen sehr hohen Wert von etwa 160° einnimmt. Dies entspricht einer extrem geringen Benetzbarkeit. Bevorzugt werden Kontaktwinkel von 90° oder mehr als 90° angestrebt. Der Kontaktwinkel zwischen dem Rand eines Produkttropfens und einer Oberfläche, auf der der Produkttropfen aufliegt, wird auch als Randwinkel oder Benetzungswinkel bezeichnet.

In Weiterbildung der Erfindung sind wenigstens im Formabschnitt Seitenbegrenzungen zur seitlichen Begrenzung des Produktspalts vorgesehen.

Auf diese Weise kann verhindert werden, dass aufgrund eines eventuell im Formabschnitt ausgeübten höheren Drucks das zu verarbeitende Vorprodukt seitlich zwischen den Kunststoffbändern heraus fließt.

In Weiterbildung der Erfindung weist ein Maschinengestell der Doppelbandpresse einen modularen Aufbau auf und ist in Längsrichtung des Produktspalts gesehen aus mehreren, lösbar miteinander verbundenen Modulen gebildet. Zweckmäßigerweise sind die beiden umlaufenden Stahlbänder sowie Umlenkungen für die Stahlbänder innerhalb eines Modulabschnitts des Maschinengestells angeordnet.

Mittels eines modularen Aufbaus sind bei geringen konstruktivem Mehraufwand Doppelbandpressen unterschiedlicher Länge und mit unterschiedlichem Aufbau realisierbar, die dann speziell auf ein herzustellendes plattenförmiges Produkt abgestimmt sind. Auch die Umrüstung der Doppelbandpresse auf ein anderes, herzustellendes Produkt wird erheblich erleichtert. Die Anordnung der beiden umlaufenden Stahlbänder innerhalb eines Moduls sowie zusätzlich gegebenenfalls auch von Heizvorrichtungen und Anpressrollen innerhalb dieses Modulabschnitts erlaubt die Nachrüstung einer Doppelbandpresse mit umlaufenden Stahlbändern zu der erfindungsgemäßen Doppelbandpresse. Die in dem Modul selbst angeordneten Heizvorrichtungen können speziell auf die Erfordernisse der umlaufenden Stahlbänder angepasst werden.

In Weiterbildung der Erfindung beträgt eine Länge des Formabschnitts weniger als die Hälfte der Länge des Produktspalts, insbesondere weniger als ein Zehntel der Länge des Produktspalts.

Auf diese Weise kann die erfindungsgemäße Doppelbandpresse kostengünstig realisiert werden. Stahlbänder sind vergleichsweise teuer und auch die erforderlichen Andrückvorrichtungen tragen zu hohen Kosten bei. Indem eine Länge des Formabschnitts lediglich einen Bruchteil der Länge des Produktspaltes beträgt, können die durch die Stahlbänder verursachten Mehrkosten gering gehalten werden. Dennoch kann man die Vorteile eines mittels der Stahlbänder aufbringbaren höheren Anpressdrucks im Formabschnitt genutzt werden.

Das der Erfindung zugrunde liegende Problem wird auch durch ein Verfahren zum Herstellen eines plattenförmigen Produkts mit einer Doppelbandpresse mit folgenden Schritten gelöst: Aufbringen wenigstens eines Vorprodukts in einem Aufgabebereich auf ein erstes Kunststoffband, Einführen des wenigstens einen Vorprodukts in einen Produktspalt zwischen dem ersten und dem zweiten Kunststoffband, Temperieren und/oder Komprimieren des wenigstens einen Vorprodukts im Produktspalt, Einführen des wenigstens einen Vorprodukts in einen Formabschnitt, wobei der Formabschnitt Teil des Produktspalts bildet und Temperieren und/oder Komprimieren des wenigstens einen Vorprodukts im Formabschnitt mittels zweier Stahlbänder, die im Formabschnitt an einer dem Produktspalt abgewandten Rückseite der Kunststoffbänder anliegen.

Das Temperieren und/oder Komprimieren des wenigstens einen Vorprodukts im Formabschnitt mittels zweier Stahlbänder erlaubt es, auch sehr dicke plattenförmige Produkte sowie plattenförmige Produkte aus Vorprodukten herzustellen, die einen vergleichsweise hohen Druck bei der Herstellung benötigen. Dies können beispielsweise plattenförmige Produkte sein, die Naturfasern enthalten oder ansonsten zur Verbindung einzelner Partikel der Vorprodukte zu einer homogenen Masse einen etwas höheren Druck benötigen. Selbst wenn kein erhöhter Druck im Formabschnitt aufgebracht werden soll, erlauben es die Stahlbänder über die Länge des Formabschnitts gesehen auf einfache Weise einen gleichmäßigen Wärmestrom in das Vorprodukt einzubringen. Aufgrund der hohen Wärmespeicherkapazität von Stahlbändern lässt sich dadurch eine über den Formabschnitt gleichmäßige Temperaturverteilung mit einfachen Mitteln erreichen. Im Unterschied zur Verwendung von Doppelbandpressen mit über die gesamte Länge durchgehenden Stahlbändern sind dabei die Wärmeverluste erheblich vermindert, da die Stahlbänder über die gesamte Länge des Formabschnitts auf einer konstanten Temperatur bleiben können und nicht in unterschiedlichen Abschnitten aufgeheizt und dann wieder abgekühlt werden müssen.

In Weiterbildung der Erfindung ist das Aufbringen, insbesondere Aufstreuen, wenigstens eines thermoplastischen Vorprodukts im Aufgabebereich vorgesehen. In vorteilhafter Weise wird das Vorprodukt im Aufgabebereich und/oder im Produktspalt aufgeheizt, um ein Verschweißen von Partikeln des wenigstens einen thermoplastischen Vorprodukts untereinander zu erreichen.

In Weiterbildung der Erfindung ist das Temperieren und/oder Komprimieren des wenigstens einen Vorprodukts im Produktspalt außerhalb des Formbereichs vorgesehen.

In Weiterbildung der Erfindung ist das Aufkaschieren wenigstens einer Schicht im Produktspalt vorgesehen.

Aufkaschiert werden können beispielsweise dekorative Schichten oder auch dünne Folien oder dergleichen, die das plattenförmige Produkt gegen Umwelteinflüsse schützen. Das Aufkaschieren ist mit dem erfindungsgemäßen Verfahren dabei problemlos durchführbar und kann selbst schwierig zu verarbeitende klebrige Produkte verarbeitbar machen, da kein direkter Kontakt mehr zwischen dem Produkt und den Kunststoffbändern bestehen muss.

Weitere Merkmale und Vorteile der Erfindung ergeben sich aus den Ansprüchen und der nachfolgenden Beschreibung bevorzugter Ausführungsformen der Erfindung im Zusammenhang mit den Zeichnungen.

Einzelmerkmale der unterschiedlichen, in den Figuren dargestellten Ausführungsformen lassen sich dabei in beliebiger Weise miteinander kombinieren, ohne den Rahmen der Erfindung zu überschreiten. In den Zeichnungen zeigen:
- Fig. 1: eine schematische Darstellung einer erfindungsgemäßen Doppelbandpresse und
- Fig. 2: eine Schnittansicht einer erfindungsgemäßen Doppelbandpresse gemäß einer weiteren Ausführungsform.

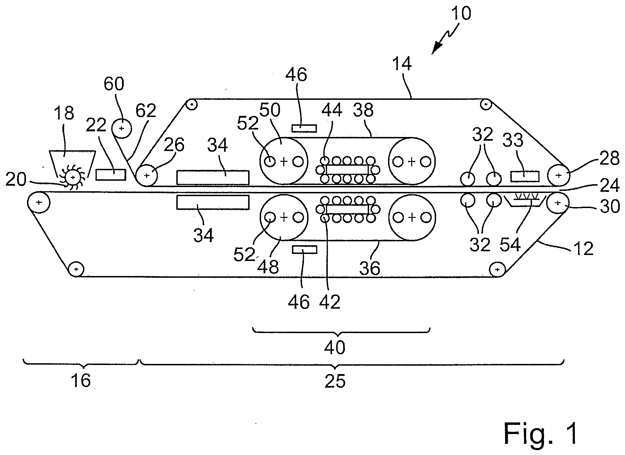

Die schematische Darstellung einer erfindungsgemäßen Doppelbandpresse 10 in Fig. 1 zeigt ein erstes, unteres umlaufendes Kunststoffband 12 und ein zweites, oberes umlaufendes Kunststoffband 14. Ein Obertrum des ersten Kunststoffbandes 12 definiert in einem Bereich 16 einen Aufgabebereich, in dem ein Vorprodukt, beispielsweise ein thermoplastisches Vorprodukt, auf das untere Kunststoffband 12 aufgebracht werden kann. Oberhalb dieses Aufgabebereichs 16 ist eine Streuvorrichtung 18 angeordnet, die im Wesentlichen aus einem Trichter zum Zuführen des Vorprodukts oder mehrerer Komponenten in Form eines Granulats oder in Form von Fasern dient. Am Ausgang des Trichters ist eine Streuwalze 20 vorgesehen, die sich über die gesamte Breite des unteren Kunststoffbandes 12 erstreckt. Die Streuwalze 20 ist auf ihrem Umfang mit Borsten versehen, um eine gleichmäßige Entnahme des als Granulat vorliegenden Vorprodukts aus dem Trichter 18 zu gewährleisten und um dieses Vorprodukt dann in gleichmäßiger Schichtdicke auf das untere Kunststoffband 12 aufzustreuen.

Stromabwärts der Streuvorrichtung 18 ist eine erste Heizvorrichtung 22 vorgesehen, die beispielsweise mittels Infrarotstrahlung ein Aufheizen des aufgestreuten Vorprodukts bewirken kann.

Stromabwärts des Aufgabebereichs 16 schließt sich ein Produktspalt 24 an, der sich über einen Produktspaltbereich 25 von einer vorderen Umlenkrolle 26 für das obere Kunststoffband 14 bis zu einer hinteren Umlenkrolle 28 für das obere Kunststoffband 14 erstreckt. Eine hintere Umlenkrolle 30 für das untere Kunststoffband 12 liegt genau gegenüber der hinteren Umlenkrolle 28. Über den gesamten Bereich des Produktspalts 24 sind die Kunststoffbänder 12, 14 mittels geeigneter Führungsrollen exakt parallel zueinander geführt. Lediglich beispielhaft sind hierzu vier Andrück- bzw. Führungsrollen 32 dargestellt. Die Andrückrollen 32 und gegebenenfalls weitere Rollen verhindern, dass beim Vorhandensein eines Vorprodukts im Produktspalt 24 sich die Kunststoffbänder 12, 14 zu weit auseinander bewegen. Befindet sich kein Vorprodukt im Produktspalt 24, so liegt das obere Kunststoffband 14 aufgrund seiner vergleichsweise geringen Spannung und seiner geringen Biegesteifigkeit über weite Abschnitte des Produktspalts 24 auf dem unteren Kunststoffband 12 auf.

Die beiden Kunststoffbänder 12, 14 laufen im Betrieb der Doppelbandpresse 10 mit der exakt gleichen Geschwindigkeit um. Zwischen einem Vorprodukt am Anfang des Produktspalts 24 bzw. einem plattenförmigen Produkt am Ende des Produktspalts 24 und den Kunststoffbändern 12, 14 besteht daher keine Relativgeschwindigkeit.

Im Anfangsbereich des Produktspalts 24 sind an einer Rückseite des unteren Kunststoffbandes 12 und an einer Rückseite des oberen Kunststoffbandes 14 jeweils Andrück- und Heizvorrichtungen 34 vorgesehen. Mittels dieser Andrück- und Heizvorrichtungen 34 wird eine Höhe des Produktspalts auf dem exakt vorgegebenen Wert gehalten und gleichzeitig werden die Kunststoffbänder 12, 14 und damit auch das im Produktspalt befindliche Vorprodukt aufgeheizt. Die dargestellte Doppelbandpresse 10 ist zur Verarbeitung von thermoplastischen Materialien vorgesehen und das Aufheizen mittels der Andrück- und Heizvorrichtungen 34 bewirkt dadurch ein Verschweißen der einzelnen Partikel des Vorprodukts im Produktspalt 24. Ein Druck, der im Bereich der Andrück- und Heizvorrichtungen 34 im Produktspalt herrscht, ist dabei vergleichsweise gering und beträgt in der Größenordnung zwischen 0,2 und 2bar. Bei höheren Anpressdrücken verschleißen entweder die Kunststoffbänder 12, 14 sehr rasch und/oder es bilden sich unerwünschte Oberflächenstrukturen im fertig gestellten plattenförmigen Produkt aus, da die Kunststoffbänder 12, 14 aufgrund ihrer geringen Biegesteifigkeit nicht in der Lage sind, einen lokal aufgebrachten Druck großflächig zu verteilen.

Stromabwärts der Andrück- und Heizvorrichtungen 34 ist ein erstes, unteres umlaufendes Stahlband 36 und ein zweites, oberes umlaufendes Stahlband 38 vorgesehen. Die beiden umlaufenden Stahlbänder 36, 38 sind so angeordnet, dass das Obertrum des unteren Stahlbandes 36 an einer dem Produktspalt 24 abgewandten Rückseite des unteren Kunststoffbandes 12 anliegt. Das obere Stahlband 38 ist so angeordnet, dass sein Untertrum an einer dem Produktspalt 24 gegenüberliegenden Rückseite des oberen Kunststoffbandes 14 anliegt. Mittels der beiden umlaufenden Stahlbänder 36, 38 kann dadurch in einem Formabschnitt 40, der ein Teil des Produktspalts 24 bildet, ein Anpressdruck auf die Kunststoffbänder 12, 14 und dadurch auf das im Produktspalt 24 befindliche Produkt ausgeübt werden. Dieser Anpressdruck ist dabei über die gesamte Länge des Formabschnitts 40 vergleichmäßigt, da die Stahlbänder 36, 38 gegenüber den Kunststoffbändern 12, 14 eine erheblich höhere Biegesteifigkeit aufweisen. Darüber hinaus wird das Obertrum des unteren Stahlbandes 36 und das Untertrum des oberen Stahlbandes 38 mittels einer umlaufenden Rollenkette 42 bzw. 44 gegen den Produktspalt 24 gedrückt. Ein Anpressdruck im Produktspalt 24 innerhalb des Formabschnitts 40 liegt dabei typischerweise in einem Bereich von 10bar bis 20bar. Ein solcher Druck reicht aus, um auch schwierig zu verarbeitende Vorprodukte in Plattenform zu bringen und um eine ausreichend hohe Dichte der hergestellten plattenförmigen Produkte zu erzielen. Beilspielsweise können Fasern, insbesondere Naturfasern mit thermoplastischem Füllmaterial zu plattenförmigen Produkten verarbeitet werden. Der Anpressdruck im Formabschnitt 40 reicht dann aus, um auch bei einer vergleichsweise hohen Steifigkeit der zu verarbeitenden Fasern eine ebene Oberfläche des hergestellten plattenförmigen Produkts zu erzielen.

Im Bereich der Stahlbänder 36, 38 sind Heizvorrichtungen 46 vorgesehen, wobei die Heizvorrichtungen 46 das Untertrum des unteren Stahlbandes 36 bzw. das Obertrum des oberen Stahlbandes 38 beaufschlagen. Aufgrund der vergleichsweise hohen Wärmespeicherkapazität der Stahlbänder 36, 38 können die Heizvorrichtungen 46 in der dargestellten Lage und damit vergleichsweise weit entfernt vom Produktspalt 24 angeordnet werden, da die Stahlbänder 36, 38 ausreichend Wärme speichern können. Zusätzlich zu den Heizvorrichtungen 46 kann auch vorgesehen sein, dass die jeweils vordere Umlenkrolle 48 bzw. 50 für die Stahlbänder 36, 38 beheizt sein kann. Hierzu können Fluidkanäle 52 in Innenraum der Umlenkrollen 50, 48 vorgesehen sein.

Die erfindungsgemäße Doppelbandpresse 10 kann dabei ohne Weiteres auch so eingesetzt werden, dass mittels der Stahlbänder 36, 38 kein oder fast kein Anpressdruck auf den Produktspalt 24 ausgeübt wird, sondern die Stahlbänder 36, 38 lediglich in ihrer Position gehalten werden, um den Produktspalt und damit die Höhe des hergestellten plattenförmigen Produkts zu begrenzen. In einem solchen Fall werden die Stahlbänder 36, 38 lediglich dazu verwendet, um Wärme in den Produktspalt 24 einzutragen.

Stromabwärts des Formabschnitts 40 können weitere Andrück- oder Führungsrollen 32 oder beispielsweise auch weitere Heizeinrichtungen vorgesehen sein.

Im Endbereich des Produktspalts 24 sind bei der dargestellten Doppelbandpresse 10 Kühlvorrichtungen in Form von Sprühdüsen 54 vorgesehen, die Kühlwasser gegen eine Unterseite des Obertrums des unteren Kunststoffbandes 12 sprühen. Eine dem Produktspalt 24 abgewandte Rückseite des oberen Kunststoffbandes 14 kann beispielsweise mittels Gebläse 33 in einfacher Weise abgekühlt werden. Am Ende des Produktspaltes 24 kann dann das fertig gestellte plattenförmige Produkt entnommen werden.

Die Doppelbandpresse 10 weist weiter noch Einrichtungen zum Aufkaschieren einer Beschichtung auf. Hierzu ist noch vor dem Einlauf in den Produktspalt 24 eine Rolle 60 vorgesehen, auf der eine aufzukaschierende Schicht 62 aufgerollt ist. Diese Schicht 62, beispielsweise eine dünne Folie, wird dann zusammen mit dem im Aufgabebereich 16 aufgestreuten Vorprodukt in den Produktspalt 24 eingezogen und verbindet sich während des Durchlaufs durch den Produktspalt 24 mit dem Vorprodukt. Es ist dabei selbstverständlich auch möglich, sowohl auf eine Unterseite als auch auf eine Oberseite des plattenförmigen Produkts eine oder mehrere Schichten aufzukaschieren.

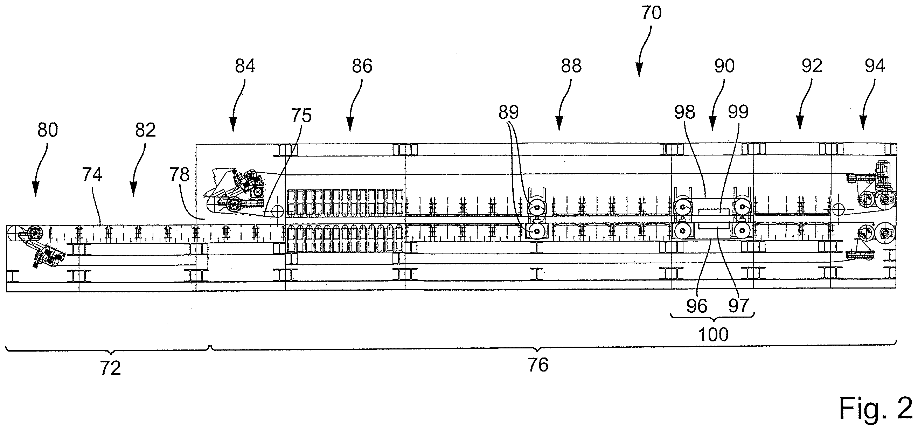

Die Darstellung der Fig. 2 zeigt eine erfindungsgemäße Doppelbandpresse 70 gemäß einer weiteren Ausführungsform der Erfindung. Die prinzipielle Funktionsweise der Doppelbandpresse 70 ist gleich wie anhand der Fig. 1 und der Doppelbandpresse 10 beschrieben, so dass keine erneute Erläuterung dieser prinzipiellen Funktionsweise erfolgt. Die Doppelbandpresse 70 weist einen Aufgabebereich 72 auf, in dem mittels nicht dargestellter Vorrichtungen, beispielsweise Streuvorrichtungen ein Vorprodukt auf ein unteres Kunststoffband 74 aufgebracht wird. Stromabwärts des Aufgabebereichs 72 beginnt ein Produktspaltbereich 76, in dem ein Produktspalt 78 abgesehen von einem Einlauf- und Auslaufbereich eine konstante Höhe aufweist. Nach dem Durchlauf durch den Produktspalt 78 kann an dessen Ende das hergestellte plattenförmige Produkt entnommen werden.

Ein Maschinenrahmen der erfindungsgemäßen Doppelbandpresse 70 ist modular aufgebaut und besteht aus insgesamt acht Modulen 80 bis 94. Die Module 80 bis 94 weisen jeweils einen abgeschlossenen, selbsttragenden Rahmen auf und sind mit den übrigen Modulen in lösbarer Weise verbunden. Beim Aufbau oder auch beim Umbau einer erfindungsgemäßen Doppelbandpresse 70 können daher einzelne Module eingefügt oder herausgenommen werden, lediglich die Länge der Kunststoffbänder 74, 75 muss dabei angepasst werden.

Das Modul 80 weist eine vordere Umlenkeinheit für das untere Kunststoffband 74 auf. Im Bereich des Moduls 82 sind unterhalb des unteren Kunststoffbandes 74 Heizeinrichtungen vorgesehen. Das Modul 84 weist eine vordere Umlenkung für das obere Kunststoffband 75 sowie Heizeinrichtungen unterhalb des unteren Kunststoffbandes 74 auf. Im Modul 86 sind Heizeinrichtungen, speziell Heizgebläse vorgesehen, um das untere Kunststoffband 74 und das obere Kunststoffband 75 und damit das im Produktspalt 78 befindliche Vorprodukt aufzuheizen und dessen Partikel untereinander zu verschweißen. Im Modul 88 sind plattenförmige Heiz- und Andrückvorrichtungen sowie mittig im Modul 88 zwei Andrückwalzen 89 vorgesehen, um die Höhe des Produkts im Produktspalt 78 auf einen vordefinierten Wert einzustellen. Im Modul 90 sind ein unteres umlaufendes Stahlband 96 und ein oberes umlaufendes Stahlband 98 vorgesehen, die im Bereich eines Formabschnitts 100 parallel zum Produktspalt verlaufen und an einer jeweiligen, dem Produktspalt 78 abgewandten Rückseite der Kunststoffbänder 74, 75 anliegen. Im Modul 90 kann mittels der Stahlbänder 96, 98 ein Anpressdruck auf das im Produktspalt 78 befindliche Produkt ausgeübt und/oder Wärme kann in den Produktspalt 78 eingetragen werden, wobei der Anpressdruck typischerweise im Bereich zwischen 10 und 20bar liegt. Im Modul 92 sind wieder plattenförmige Andrück- und Heizvorrichtungen vorgesehen, wobei im Modul 92 alternativ auch abgekühlt werden kann. Im Modul 94 sind die jeweils hintere Umlenkung für das untere Kunststoffband 74 und das obere Kunststoffband 75 angeordnet.

Anhand der Darstellung der Fig. 2 ist zu erkennen, dass der Formabschnitt 100, in dem die beiden umlaufenden Stahlbänder vorgesehen sind, wesentlich kürzer ist als die Länge des Produktspalts 78. Auf diese Weise kann die erfindungsgemäße Doppelbandpresse 70 kostengünstig realisiert werden, da die Stahlbänder 96, 98 gegenüber den Kunststoffbändern 74, 75 teuer sind. Dennoch kann innerhalb des Moduls 90 ein vergleichsweise großer Anpressdruck auf das im Produktspalt 78 befindliche Produkt ausgeübt oder eine große Wärmemenge eingetragen werden. Aufgrund der hohen Biegesteifigkeit der Stahlbänder 96, 98 kann über die gesamte Länge des Formabschnitts 100 ein Anpressdruck mit vergleichmäßigtem Verlauf ausgeübt werden. Die Länge des Formabschnitts 100 beträgt maximal die Hälfte der Länge des Produktspalts 78 und kann sogar weniger als ein Zehntel der Länge des Produktspalts 78 betragen.

## Patentansprüche

1. Doppelbandpresse mit einem ersten, unteren umlaufenden Kunststoffband (12; 74) und einem zweiten, oberen umlaufenden Kunststoffband (14; 75), wobei die Kunststoffbänder (12, 14; 74, 75) eine erste, niedrige Biegesteifigkeit aufweisen und wobei ein Produktspalt (24; 78) zwischen den einander zugewandten Trums der Kunststoffbänder (12, 14; 74, 75) zum Formen eines plattenförmigen Produkts gebildet ist, mit einem ersten umlaufenden unteren Stahlband (36; 96) und einem zweiten umlaufenden oberen Stahlband (38; 98), wobei die Stahlbänder (36, 38; 96, 98) eine zweite, gegenüber der Biegesteifigkeit der Kunststoffbänder (12, 14; 74, 75) hohe Biegesteifigkeit aufweisen, wobei ein Formabschnitt (40; 100) zwischen den einander zugewandten Trums der Stahlbänder (36, 38; 96, 98) gebildet ist, wobei der Formabschnitt (40; 100) Teil der Länge des Produktspalts (24; 78) bildet, wobei in dem Formabschnitt (40; 100) im Betrieb das erste, untere Stahlband (36; 96) parallel und anliegend an eine dem Produktspalt (24; 78) abgewandte Rückseite des ersten Kunststoffbands (12; 74) verläuft und wobei in dem Formabschnitt (40; 100) im Betrieb das zweite obere Stahlband (38; 98) parallel und anliegend an eine dem Produktspalt (24; 78) abgewandte Rückseite des zweiten Kunststoffbands (14; 75) verläuft, **dadurch gekennzeichnet, dass** sich stromaufwärts und stromabwärts des Formabschnitts (40; 100) Abschnitte des Produktspalts (24; 78) anschließen, in denen der Produktspalt (24; 78) dieselbe konstante Höhe aufweist wie im Formabschnitt (40; 100).

2. Doppelbandpresse nach Anspruch 1, **dadurch gekennzeichnet, dass** Heiz- und/oder Kühlvorrichtungen (46, 52) zum Heizen beziehungsweise Kühlen des ersten und zweiten Stahlbands (36, 38; 96, 98) vorgesehen sind.

3. Doppelbandpresse nach Anspruch 1 oder 2, **dadurch gekennzeichnet, dass** Heiz- und/oder Kühlvorrichtungen (34, 54) zum Heizen beziehungsweise Kühlen des ersten und des zweiten Kunststoffbandes (12, 14; 74, 75) außerhalb des Formabschnitts (40; 100) vorgesehen sind.

4. Doppelbandpresse nach einem der vorstehenden Ansprüche, **dadurch gekennzeichnet, dass** Andrückvorrichtungen (42, 44) vorgesehen sind, um im Formabschnitt (40; 100) auf ein zwischen den Kunststoffbändern (12, 14; 74, 75) angeordnetes Produkt mittels der Stahlbänder (36, 38; 96, 98) einen Anpressdruck aufzubringen.

5. Doppelbandpresse nach Anspruch 4, **dadurch gekennzeichnet, dass** der Anpressdruck im Bereich von 0,1 bar bis 50bar (0,1x10⁵ N/m² bis 50x10⁵ N/m²) liegt.

6. Doppelbandpresse nach Anspruch 4 oder 5, **dadurch gekennzeichnet, dass** die Andrückvorrichtungen (97, 99) ausgebildet sind, um mittels der Stahlbänder (96, 98) im Formbereich einen im wesentlichen über den gesamten Formbereich gleichmäßigen Anpressdruck aufzubringen.

7. Doppelbandpresse nach Anspruch 6, **dadurch gekennzeichnet, dass** die Andrückvorrichtungen (97, 99) ausgebildet sind, um eine dem Produktspalt abgewandte Rückseite der Stahlbänder (96, 98) mit unter Druck stehendem Fluid zu beaufschlagen.

8. Doppelbandpresse nach einem der vorstehenden Ansprüche, **dadurch gekennzeichnet, dass** die Kunststoffbänder (12, 14; 74, 75) wenigstens auf ihrer dem Produktspalt (24, 78) zugewandten Seite mit einer Antihaftbeschichtung versehen sind.

9. Doppelbandpresse nach einem der vorstehenden Ansprüche, **dadurch gekennzeichnet, dass** wenigstens im Formabschnitt Seitenbegrenzungen zur seitlichen Begrenzung des Produktspalts vorgesehen sind.

10. Doppelbandpresse nach einem der vorstehenden Ansprüche **dadurch gekennzeichnet, dass** ein Maschinengestell der Doppelbandpresse (70) einen modularen Aufbau aufweist und in Längsrichtung des Produktspalts (78) gesehen aus mehreren, lösbar miteinander verbundenen Modulen (80, 82, 84, 86, 88, 90, 92, 94) gebildet ist.

11. Doppelbandpresse nach Anspruch 10, **dadurch gekennzeichnet, dass** die beiden umlaufenden Stahlbänder (96, 98) sowie Umlenkungen für die Stahlbänder (96, 98) innerhalb eines Moduls (90) des Maschinengestells angeordnet sind.

12. Doppelbandpresse nach einem der vorstehenden Ansprüche, **dadurch gekennzeichnet, dass** eine Länge des Formabschnitts (40; 100) weniger als die Hälfte der Länge des Produktspalts (24; 78), insbesondere weniger als ein Zehntel der Länge des Produktspalts (24; 78), beträgt.

13. Verfahren zum Herstellen eines plattenförmigen Produkts mit einer Doppelbandpresse nach Anspruch 1 mit den Schritten:
- Aufbringen wenigstens eines Vorprodukts in einem Aufgabebereich (16; 72) auf ein erstes Kunststoffband (12; 74),
- Einführen des wenigstens einen Vorprodukts in einen Produktspalt (24; 78) zwischen dem ersten und dem zweiten Kunststoffband (12, 14; 74, 75),
- Einführen des wenigstens einen Vorprodukts in einen Formabschnitt (40; 100), wobei der Formabschnitt (40; 100) Teil der Länge des Produktspalts (24; 78) bildet und
- Temperieren und/oder Komprimieren des wenigstens einen Vorprodukts im Formabschnitt (40; 100) mittels zweier Stahlbänder (36, 38; 96, 98), die im Formabschnitt (40; 100) an einer dem Produktspalt (24; 78) abgewandten Rückseite der Kunststoffbänder (12, 14; 74, 75) anliegen,
- wobei sich stromaufwärts und stromabwärts des Formabschnitts (40; 100) Abschnitte des Produktspalts (24; 78) anschließen, in denen der Produktspalt (24; 78) dieselbe konstante Höhe aufweist wie im Formabschnitt (40; 100).

14. Verfahren nach Anspruch 13, **gekennzeichnet durch** Aufbringen, insbesondere Aufstreuen wenigstens, eines thermoplastischen Vorprodukts im Aufgabebereich (16; 72).

15. Verfahren nach Anspruch 14, **gekennzeichnet durch** Aufheizen des Vorprodukts im Aufgabebereich (16; 72) und/oder im Produktspalt (24, 78) zum Verschweißen von Partikeln des wenigstens einen thermoplastischen Vorprodukts untereinander.

16. Verfahren nach Anspruch 13, 14 oder 15, **gekennzeichnet durch** Temperieren und/oder Komprimieren des wenigstens einen Vorprodukts im Produktspalt (24; 78) außerhalb des Formbereichs (40; 100).

17. Verfahren nach einem der Ansprüche 13 bis 16, **gekennzeichnet durch** Aufkaschieren wenigstens einer Schicht (62) im Produktspalt (24; 78).

## Claims

1. A double belt press with a first, lower revolving plastic belt (12; 74) and with a second, upper revolving plastic belt (14; 75), the plastic belts (12, 14; 74, 75) having a first, low flexural rigidity, and a product gap (24; 78) between the mutually confronting strands of the plastic belts (12, 14; 74, 75) being formed for the purpose of shaping a plate-like product, with a first revolving lower steel belt (36; 96) and a second revolving upper steel belt (38; 98), the steel belts (36, 38; 96, 98) having a second flexural rigidity which is high in relation to the flexural rigidity of the plastic belts (12, 14; 74, 75), a shaping portion (40; 100) being formed between the mutually confronting strands of the steel belts (36, 38; 96, 98), the shaping portion (40; 100) forming part of the product gap (24; 78), during operation the first, lower steel belt (36; 96) running in the shaping portion (40; 100) parallel to and so as to bear against a rear side, facing away from the product gap (24; 78), of the first plastic belt (12; 74), and during operation the second, upper steel belt (38; 98) running in the shaping portion (40; 100) parallel to and so as to bear against a rear side, facing away from the product gap (24; 78), of the second plastic belt (14; 75), **characterized in that** portions of the product gap (24, 78) adjoin the shaping portion (40; 100) upstream and downstream, wherein the product gap (24, 78) has the same constant height as in the shaping portion (40; 100).

2. The double belt press according to claim 1, **characterized in that** heating and/or cooling devices (46, 52) for heating or cooling the first and the second steel belt (36, 38; 96, 98) are provided.

3. The double belt press according to claim 1 or 2, **characterized in that** heating and/or cooling devices (34, 54) for heating or cooling the first and the second plastic belt (12, 14; 74, 75) are provided outside the shaping portion (40; 100).

4. The double belt press according to any of the preceding claims, **characterized in that** pressure devices (42, 44) are provided in order to apply a pressure force in the shaping portion (40; 100) by means of the steel belts (36, 38; 96, 98) to a product arranged between the plastic belts (12, 14; 74, 75).

5. The double belt press according to claim 4, **characterized in that** the pressure force lies in the range of 0.1 bar to 50 bar (0.1 × 10⁵ N/m² to 50 × 10⁵ N/m²).

6. The double belt press according to claim 4 or 5, **characterized in that** the pressure devices (97, 99) are designed in order to apply in the shaping region by means of the steel belts (96, 98) a pressure force which is uniform essentially over the entire shaping region.

7. The double belt press according to claim 6, **characterized in that** the pressure devices (97, 99) are designed in order to act with pressurized fluid upon a rear side, facing away from the product gap, of the steel belts (96, 98).

8. The double belt press according to any of the preceding claims, **characterized in that** the plastic belts (12, 14; 74, 75) are provided, at least on their side facing the product gap (24, 78), with a nonstick coating.

9. The double belt press according to any of the preceding claims, **characterized in that**, at least in the shaping portion, side boundaries for laterally delimiting the product gap are provided.

10. The double belt press according to any of the preceding claims, **characterized in that** a machine stand of the double belt press (70) has a modular set-up and, as seen in the longitudinal direction of the product gap (78), is formed from a plurality of modules (80, 82, 84, 86, 88, 90, 92, 94) connected releasably to one another.

11. The double belt press according to claim 10, **characterized in that** the two revolving steel belts (96, 98) and also deflections for the steel belts (96, 98) are arranged inside a module (90) of the machine stand.

12. The double belt press according to any of the preceding claims, **characterized in that** a length of the shaping portion (40; 100) amounts to less than half the length of the product gap (24; 78), in particular to less than one tenth of the length of the product gap (24; 78).

13. A method for producing a plate-like product using a double belt press according to claim 1, comprising the steps:
- application of at least one preproduct into a feed region (16; 72) to a first plastic belt (12; 74),
- introduction of the at least one preproduct into a product gap (24; 78) between the first and the second plastic belt (12, 14; 74, 75),
- introduction of the at least one preproduct into a shaping portion (40; 100), the shaping portion (40; 100) forming part of the length of the product gap (24; 78), and
- thermal treatment and/or compression of the at least one preproduct in the shaping portion (40; 100) by means of two steel belts (36, 38; 96, 98) which bear in the shaping portion (40; 100) against a rear side, facing away from the product gap (24; 78), of the plastic belts (12, 14; 74, 75),
- wherein portions of the product gap (24, 78) adjoin the shaping portion (40; 100) upstream and downstream, wherein the product gap (24, 78) has the same constant height as in the shaping portion (40; 100).

14. The method according to claim 13, **characterized by** application, in particular scattering, of at least one thermoplastic preproduct in the feed region (16; 72).

15. The method according to claim 14, **characterized by** heating of the preproduct in the feed region (16; 72) and/or in the product gap (24, 78) for the welding of particles of the at least one thermoplastic preproduct to one another.

16. The method according to claim 13, 14 or 15, **characterized by** thermal treatment and/or compression of the at least one preproduct in the product gap (24; 78) outside the shaping region (40; 100).

17. The method according to any of claims 13 to 16, **characterized by** laminating on of at least one layer (62) in the product gap (24; 78).

## Revendications

1. Presse à double bande avec une première bande inférieure en matière plastique en rotation (12; 74) et une deuxième bande supérieure en matière plastique en rotation (14; 75), dans laquelle les bandes en matière plastique (12, 14; 74, 75) présentent une première rigidité à la flexion faible et dans laquelle une emprise de produit (24; 78) est formée entre les brins tournés l'un vers l'autre des bandes en matière plastique (12, 14; 74, 75) pour former un produit en forme de plaque, avec une première bande inférieure en acier en rotation (36; 96) et une deuxième bande supérieure en acier en rotation (38; 98), dans laquelle les bandes en acier (36, 38; 96, 98) présentent une deuxième rigidité à la flexion élevée par rapport à la rigidité à la flexion des bandes en matière plastique (12, 14; 74, 75), dans laquelle une section de formage (40; 100) est formée entre les brins tournés l'un vers l'autre des bandes en acier (36, 38; 96, 98), dans laquelle la section de formage (40; 100) forme une partie de la longueur de l'emprise de produit (24; 78), dans laquelle la première bande inférieure en acier (36; 96) s'étend en fonctionnement dans la section de formage (40; 100) parallèlement à et en s'appliquant sur un côté arrière de la première bande en matière plastique (12; 74) détourné de l'emprise de produit (24; 78) et dans lequel la deuxième bande supérieure en acier (38; 98) s'étend en fonctionnement dans la section de formage (40; 100) parallèlement à et en s'appliquant sur un côté arrière de la deuxième bande en matière plastique (14; 75) détourné de l'emprise de produit (24; 78), **caractérisée en ce que** des sections de l'emprise de produit (24; 78) se raccordent en amont et en aval de la section de formage (40; 100), dans lesquelles l'emprise de produit (24; 78) présente la même hauteur constante que dans la section de formage (40; 100).

2. Presse à double bande selon la revendication 1, **caractérisée en ce qu'**il est prévu des dispositifs de chauffage et/ou de refroidissement (46, 52) pour le chauffage respectivement le refroidissement de la première et de la deuxième bande en acier (36, 38; 96, 98).

3. Presse à double bande selon la revendication 1 ou 2, **caractérisée en ce qu'**il est prévu des dispositifs de chauffage et/ou de refroidissement (34, 54) pour le chauffage respectivement le refroidissement de la première et de la deuxième bande en matière plastique (12, 14; 74, 75) à l'extérieur de la section de formage (40; 100).

4. Presse à double bande selon l'une quelconque des revendications précédentes, **caractérisée en ce qu'**il est prévu des dispositifs de pression (42, 44), pour appliquer dans la section de formage (40; 100) une pression d'application sur un produit disposé entre les bandes en matière plastique (12, 14; 74, 75) au moyen des bandes en acier (36, 38; 96, 98).

5. Presse à double bande selon la revendication 4, **caractérisée en ce que** la pression d'application se situe dans la plage comprise entre 0,1 bar et 50 bar (0,1 x 10⁵ N/m² à 50 x 10⁵ N/m²).

6. Presse à double bande selon la revendication 4 ou 5, **caractérisée en ce que** les dispositifs de pression (97, 99) sont réalisés de façon à appliquer dans la région de formage une pression d'application essentiellement uniforme sur toute la région de formage au moyen des bandes en acier (96, 98).

7. Presse à double bande selon la revendication 6, **caractérisée en ce que** les dispositifs de pression (97, 99) sont réalisés de façon à exposer un côté arrière des bandes en acier (96, 98) détourné de l'emprise de produit à un fluide se trouvant sous pression.

8. Presse à double bande selon l'une quelconque des revendications précédentes, **caractérisée en ce que** les bandes en matière plastique (12, 14; 74, 75) sont munies d'une couche anti-adhérence au moins sur leur côté tourné vers l'emprise de produit (24, 78).

9. Presse à double bande selon l'une quelconque des revendications précédentes, **caractérisée en ce qu'**il est prévu au moins dans la section de formage des limitations latérales pour limiter latéralement l'emprise de produit.

10. Presse à double bande selon l'une quelconque des revendications précédentes, **caractérisée en ce qu'**un bâti de machine de la presse à double bande (70) présente une structure modulaire et, considéré en direction longitudinale de l'emprise de produit (78), est formé de plusieurs modules assemblés l'un à l'autre de façon séparable (80, 82, 84, 86, 88, 90, 92, 94).

11. Presse à double bande selon la revendication 10, **caractérisée en ce que** les deux bandes en acier en rotation (96, 98) ainsi que des déviations pour les bandes en acier (96, 98) sont disposées à l'intérieur d'un module (90) du bâti de machine.

12. Presse à double bande selon l'une quelconque des revendications précédentes, **caractérisée en ce qu'**une longueur de la section de formage (40; 100) vaut moins de la moitié de la longueur de l'emprise de produit (24; 78), en particulier moins d'un dixième de la longueur de l'emprise de produit (24; 78).

13. Procédé de fabrication d'un produit en forme de plaque avec une presse à double bande selon la revendication 1, comprenant les étapes suivantes:
- déposer au moins un produit primaire dans une zone de chargement (16; 72) sur une première bande en matière plastique (12; 74),
- introduire ledit au moins un produit primaire dans une emprise de produit (24; 78) entre la première et la deuxième bande en matière plastique (12, 14; 74, 75),
- introduire ledit au moins un produit primaire dans une section de formage (40; 100), dans lequel la section de formage (40; 100) forme une partie de la longueur de l'emprise de produit (24; 78), et
- égaliser la température dudit et/ou comprimer ledit au moins un produit primaire dans la section de formage (40; 100) au moyen de deux bandes en acier (36, 38; 96, 98), qui s'appliquent dans la section de formage (40; 100) sur un côté arrière des bandes en matière plastique (12, 14; 74, 75) détourné de l'emprise de produit (24; 78),
- dans lequel des sections de l'emprise de produit (24; 78) se raccordent en amont et en aval de la section de formage (40; 100), dans lesquelles l'emprise de produit (24; 78) présente la même hauteur constante que dans la section de formage (40; 100).

14. Procédé selon la revendication 13, **caractérisé par** la pose, en particulier l'épandage d'au moins un produit primaire thermoplastique dans la zone de chargement (16; 72).

15. Procédé selon la revendication 14, **caractérisé par** le chauffage du produit primaire dans la zone de chargement (16; 72) et/ou dans l'emprise de produit (24; 78) pour le soudage de particules dudit au moins un produit primaire thermoplastique.

16. Procédé selon la revendication 13, 14 ou 15, **caractérisé par** l'égalisation de la température et/ou la compression dudit au moins un produit primaire dans l'emprise de produit (24; 78) à l'extérieur de la région de formage (40; 100).

17. Procédé selon l'une quelconque des revendications 13 à 16, **caractérisé par** le collage d'au moins une couche (62) dans l'emprise de produit (24; 78).
